# EUROPEAN PATENT APPLICATION

(11) **EP 3 150 298 A1**
(43) Date of publication of application: **05.04.2017**
(21) Application number: 16190946.0
(22) Date of filing: 27.09.2016
(51) Int. Cl.: B22C 9/10, B22D 29/00, B28B 1/00, B29C 67/00

(54) **CASTING CORE APPARATUS AND CASTING METHOD**

(30) Priority: 30.09.2015 US 201514870184
(71) Applicant: General Electric Company, Schenectady, NY 12345 (US)
(72) Inventor: GOLD, Scott Alan, West Chester, OH 45069 (US)
(74) Representative: Pöpper, Evamaria

(57) **Abstract**

A casting mold apparatus includes a unitary ceramic core (48) including: an outer skin (58) defining an outer surface (56); and an internal support structure (60) disposed inside the outer skin (58), the internal support structure (60) defining a plurality of voids (62) configured to admit fluid to the core (48).

## Description

### BACKGROUND OF THE INVENTION

The present invention relates to casting methods, and more particularly, to casting core apparatus and methods for removing casting cores.

Gas turbine engine components such as turbine airfoils are frequently manufactured using an investment casting process in which molten metal alloy is introduced into a mold cavity defined between a ceramic shell and a ceramic core and allowed to solidify, forming a completed casting.

A time consuming step in the manufacturing process is removal of the core after the casting is complete. This involves leaching out the ceramic material with a caustic solution (usually aqueous sodium hydroxide or potassium hydroxide). In the future, this challenge will be magnified as higher temperature, yttrium-containing alloys are used, requiring non-reactive casting core materials such as alumina- and zirconia-based ceramics. These core materials leach much more slowly than silica based materials currently in use.

Accordingly, there remains a need for a core which is readily leachable.

### BRIEF DESCRIPTION OF THE INVENTION

This need is addressed by a casting core including an outer skin and an internal support structure containing voids to facilitate transport of a leaching agent. The core may be manufactured using additive manufacturing methods.

### BRIEF DESCRIPTION OF THE DRAWINGS

The invention may be best understood by reference to the following description, taken in conjunction with the accompanying drawing figures in which:
FIG. 1 is a schematic perspective view of a high-pressure turbine blade of a gas turbine engine;
FIG. 2 is a schematic cross-sectional view of a mold used to cast the turbine blade of FIG. 1;
FIG. 3 is an enlarged view of the core shown in FIG. 2; and
FIG. 4 is a perspective, partially cut-away view of an alternative core and a turbine blade.

### DETAILED DESCRIPTION OF THE INVENTION

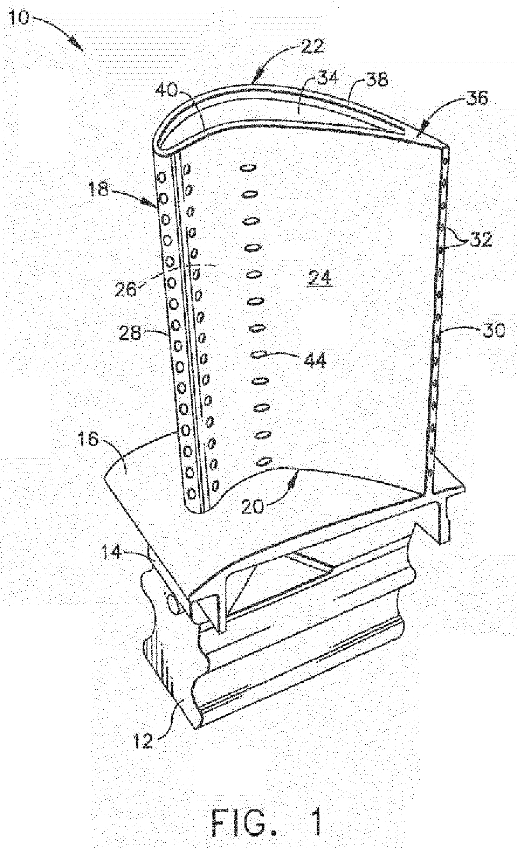

Referring to the drawings wherein identical reference numerals denote the same elements throughout the various views, FIG. 1 illustrates an exemplary turbine blade 10. Described herein is a method and apparatus for casting metallic components such as the turbine blade 10, a process requiring internal coring to form internal features. The turbine blade 10 is only one example of numerous types of components that require such coring, which can be manufactured using the principles of the present invention.

The turbine blade 10 includes a conventional dovetail 12, which may have any suitable form including tangs that engage complementary tangs of a dovetail slot in a rotor disk (not shown) for radially retaining the blade 10 to the disk as it rotates during operation. A blade shank 14 extends radially upwardly from the dovetail 12 and terminates in a platform 16 that projects laterally outwardly from and surrounds the shank 14. A hollow airfoil 18 extends radially outwardly from the platform 16 and into the hot gas stream. The airfoil has a root 20 at the junction of the platform 16 and the airfoil 18, and a tip 22 at its radially outer end. The airfoil 18 has a concave pressure side wall 24 and a convex suction side wall 26 joined together at a leading edge 28 and at a trailing edge 30. The airfoil 18 may take any configuration suitable for extracting energy from the hot gas stream and causing rotation of the rotor disk. The airfoil 18 may incorporate a plurality of trailing edge cooling holes 32, or it may incorporate a number of trailing edge bleed slots (not shown) on the pressure side wall 24 of the airfoil 18. The tip 22 of the airfoil 18 is closed off by a tip cap 34 which may be integral to the airfoil 18 or separately formed and attached to the airfoil 18. An upstanding squealer tip 36 extends radially outwardly from the tip cap 34 and is disposed in close proximity to a stationary shroud (not shown) in the assembled engine, in order to minimize airflow losses past the tip 22. The squealer tip 36 comprises a suction side tip wall 38 disposed in a spaced-apart relationship to a pressure side tip wall 40. The tip walls 40 and 38 are integral to the airfoil 18 and form extensions of the pressure and suction side walls 24 and 26, respectively. The outer surfaces of the pressure and suction side tip walls 40 and 38 respectively form continuous surfaces with the outer surfaces of the pressure and suction side walls 24 and 26. A plurality of film cooling holes 44 pass through the exterior walls of the airfoil 18. The film cooling holes 44 communicate with a hollow interior space of the airfoil 18 (not shown), which may include a complex arrangement of cooling passageways defined by internal walls, such as a serpentine configuration.

In order to have sufficient creep rupture and fatigue strengths, and to resist hot corrosion and oxidation, the turbine blade 10 may be made from a material such as a nickel- or cobalt-based alloy having good high-temperature creep resistance, known conventionally as "superalloys."

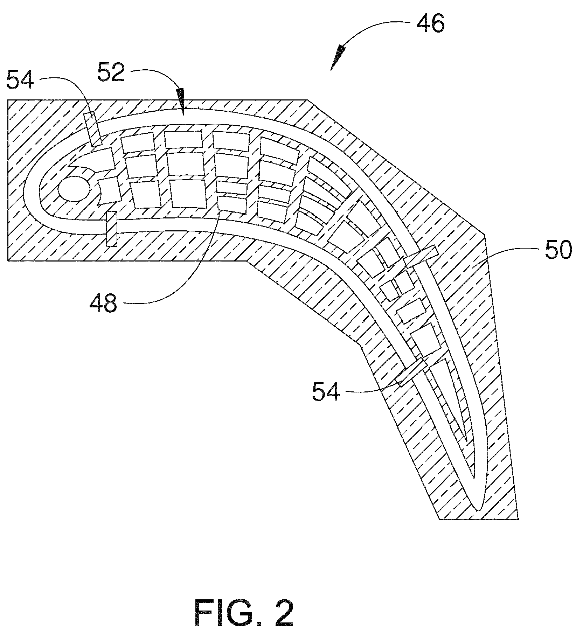

Referring to FIG. 2, the turbine blade 10 may be formed using a casting method in which a mold 46 is assembled comprising a core 48 and a shell 50, which cooperate to define a mold cavity 52 therebetween. The core 48 and shell 50 may be fixed in position relative to each other using quartz rods 54 or other appropriate structures to span the gap therebetween. After the mold 46 is prepared, molten metal is introduced into the mold cavity 52, and then allowed to cool and solidify. Subsequently, the mold 46 is removed by breaking, dissolving, or leaching. Generally the core 48 is not physically accessible for breaking, and therefore may be removed by leaching, by contacting the core with a caustic material. Non-limiting examples of caustic materials include aqueous sodium hydroxide and potassium hydroxide.

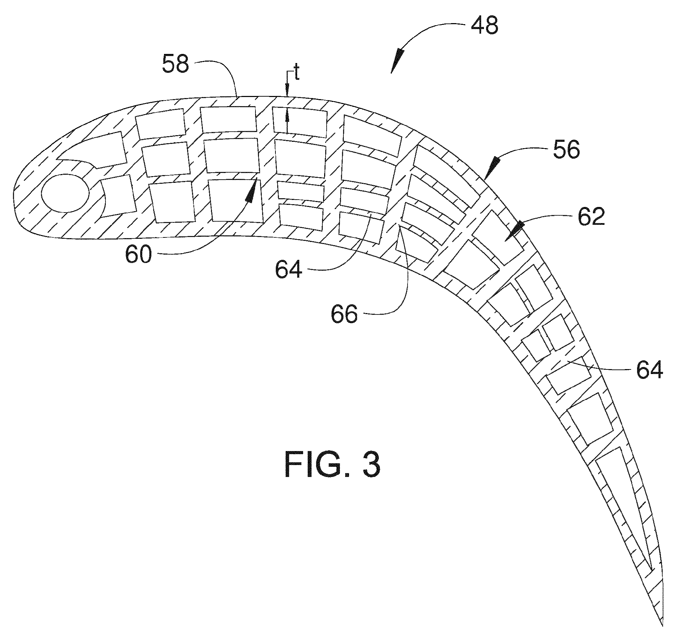

FIG. 3 illustrates the core 48 in more detail. The core 48 is an integral or unitary structure having an outer surface 56 which defines the shape of a desired component (or stated another way, is the negative form of the desired positive component). In this particular example the core 48 is generally airfoil-shaped. Preferably, the outer surface 56 has a smooth surface finish, thereby requiring little or no post-cast finishing of the surface of the resulting component. For best surface finish, the outer surface 56 is preferably highly dense, that is, it has a low porosity. The outer surface 56 may be nearly 100% dense. For example, the outer surface may be greater than 90% dense (that is, less than 10% porosity). At least one known ceramic material suitable for this process has a surface density greater than 95%. Below approximately 75% density, surface finish of the resultant casting would be noticeably rougher, but leaching rate would be higher. Depending upon the specific application, a surface density as low as approximately 50% may result in acceptable surface finish.

The interior of the core 48 away from the outer surface 56 incorporates controlled macroporosity. As used herein the "macroporosity" refers to the presence of macro-level pores, cavities, channels, holes, or other voids 62. The purpose of the voids 62 is to facilitate penetration of a caustic leaching agent in fluid form, during core removal. To be effective the leaching agent must directly contact the ceramic material. Accordingly, the voids 62 may be arranged such that no portion of the core 48 has a wall thickness greater than a predefined dimension "t", where thickness t is selected based on the rate of action of the leaching agent and the time desired to complete the leaching process.

The core 48 could also be described as having an outer skin 58 and an internal support structure 60. The outer skin 58 defines the outer surface 56 and is sufficiently thick to resist distortion and damage during the casting process. The internal support structure 60 is disposed inside the periphery of the outer skin 58, and comprises structural elements which define the voids 62.

In the illustrated example, the internal support structure 60 is configured as a plurality of dividers or walls 64 which span the interior of the outer skin 56 and meet at a plurality of intersections 66. In this example the walls 64 and the voids 62 extend in a spanwise direction, allowing leaching agent to be introduced at locations corresponding to the root 20 or tip 22 of the airfoil 18 and to flow all over the spanwise extent of the core 48.

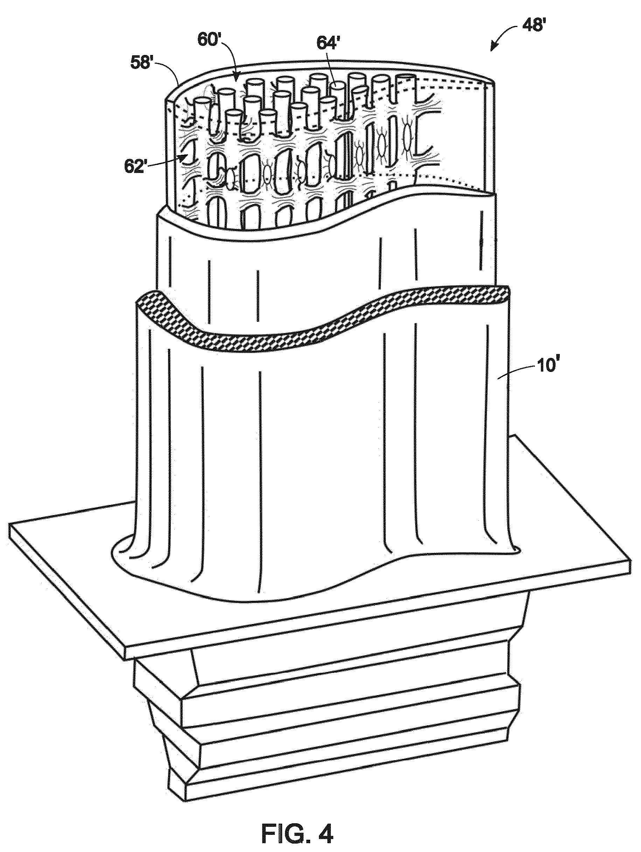

In addition to facilitating transportation of liquid leaching agent into and out of the core 48, the internal support structure 60 may be configured to provide structural support for the core 48, including ensuring mechanical support in areas subject to high stress during the casting process, and/or to control thermal expansion of the core 48 during the casting process. The internal support structure 60 may take any suitable form including a two- or three-dimensional array of walls, dividers, rods, struts, or beams. The elements of the internal support structure 60 may be arranged as a lattice or structural truss. FIG. 4 illustrates an example of a core 48' surrounded by a portion of a turbine blade 10'. The core 48' includes an outer skin 58' and an internal support structure 60' comprising a three-dimensional lattice of struts 64', defining voids 62'.

The core 48 is constructed from a refractory material capable of maintaining structural integrity when exposed to molten metal alloys at high temperatures. For example, the core 48 may be formed from a solid ceramic material. Nonlimiting examples of ceramics include those based on silica, alumina, and zirconia. Materials such as alumina- and zirconia-based ceramics are considered non-reactive with the metal alloys described above.

The core 48 may be built using an additive manufacturing process. "Additive manufacturing" is a term used herein to describe a process which involves layer-by-layer construction or additive fabrication (as opposed to material removal as with conventional machining processes). Such processes may also be referred to as "rapid manufacturing processes". Additive manufacturing processes include, but are not limited to: Laser Net Shape Manufacturing (LNSM), electron beam sintering, Selective Laser Sintering (SLS), 3D printing, such as by inkjets and laserjets, micro-pen deposition, Sterolithography (SLA), Electron Beam Melting (EBM), and Laser Engineered Net Shaping (LENS). Among these processes, SLA is especially known to produce good surface finishes, that is, surfaces with low surface roughness.

During the build process of the core 48, the voids 62 may be filled with a support material. For example, a material such as wax or thermoplastic may be deposited concurrently or alternately with the ceramic material. Alternatively, the support material may comprise ceramic material which is left uncured. In either case, the support material would be removed after the additive manufacturing process is complete, leaving the voids 62. Optionally, the core 48 and the shell 50 may be built concurrently as part of a single additive build cycle.

The apparatus and method described above has several benefits. Direct production of cores using additive manufacturing methods allows for controlled variations in density. The provision of a dense skin with a relatively spare lattice-like interior provides both mechanical strength as well as a path for impregnation leaching agents. This has the potential to significantly reduce process cycle time compared to prior art methods by accelerating the process of leaching out the core after the casting is complete.

The foregoing has described a casting core apparatus and casting method. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends any novel one, or any novel combination, of the features disclosed in this specification (including any accompanying claims, abstract and drawings), or to any novel one, or any novel combination, of the steps of any method or process so disclosed.

Various aspects and embodiments of the present invention are defined by the following clauses:
1. A casting mold apparatus, comprising:
   a unitary ceramic core comprising:
      an outer skin defining an outer surface; and
      an internal support structure disposed inside the outer skin, the internal support structure defining a plurality of voids configured to admit fluid to the core.
2. The apparatus of clause 1 wherein the internal support structure of the core is configured to accommodate thermal expansion and contraction of the core.
3. The apparatus of clause 1 wherein the ceramic material is alumina- or zirconia-based.
4. The apparatus of clause 1 wherein the internal support structure comprises a lattice of interconnected walls.
5. The apparatus of clause 1 where the core has an airfoil shape, and the voids extend through the core in a spanwise direction relative to the airfoil shape.
6. The apparatus of clause 1 wherein the outer surface is at least 75% dense.
7. The apparatus of clause 1 wherein the outer surface is greater than 90% dense.
8. The apparatus of clause 1 further comprising:
   a shell of ceramic material disposed at least partially surrounding the core, such that a mold cavity in the shape of a component is defined between the shell and the core.
9. A method of forming a mold for casting a metallic component, comprising:
   using an additive manufacturing process, forming a unitary core of ceramic material, comprising an outer skin and an internal support structure disposed inside the outer skin, the internal support structure defining a plurality of voids configured to admit fluid to the core.
10. The method of clause 9 wherein the additive manufacturing process comprises stereolithography.
11. The method of clause 9 wherein the ceramic material comprises at least one of alumina or zirconia.
12. The method of clause 9 wherein the outer surface is at least 75% dense.
13. The method of clause 9 wherein the outer surface is greater than 90% dense.
14. The method of clause 9 wherein, during the additive manufacturing process, the voids are filled with a support material which is removed when the additive manufacturing process is complete.
15. The method of clause 14 wherein the support material is uncured ceramic material.
16. The method of clause 9 further comprising:
   forming a shell of ceramic material; and
   positioning the shell in position at least partially surrounding the core, such that a mold cavity in the shape of a component is defined between the shell and the core.
17. The method of clause 16 further comprising:
   introducing molten metal alloy into the mold cavity;
   allowing the metal alloy to cool and solidify; and
   removing the core by introducing caustic material into the voids of the core.
18. The method of clause 17 wherein the caustic material includes at least one of sodium hydroxide and potassium hydroxide.

## Claims

1. A casting mold apparatus, comprising:
a unitary ceramic core (48) comprising:
an outer skin (58) defining an outer surface (56); and
an internal support structure (60) disposed inside the outer skin (58), the internal support structure (60) defining a plurality of voids (62) configured to admit fluid to the core (48).

2. The apparatus of claim 1 wherein the internal support structure (60) of the core (48) is configured to accommodate thermal expansion and contraction of the core (48).

3. The apparatus of claim 1 wherein the ceramic material is alumina- or zirconia-based.

4. The apparatus of claim 1 wherein the outer surface (56) is at least 75% dense.

5. A method of forming a mold for casting a metallic component, comprising:
using an additive manufacturing process, forming a unitary core (48) of ceramic material, comprising an outer skin (58) and an internal support structure (60) disposed inside the outer skin (58), the internal support structure (60) defining a plurality of voids (62) configured to admit fluid to the core (48).

6. The method of claim 5 wherein the additive manufacturing process comprises stereolithography.

7. The method of claim 5 wherein the outer surface (56) is at least 75% dense.

8. The method of claim 5 further comprising:
forming a shell (50) of ceramic material; and
positioning the shell (50) in position at least partially surrounding the core (48), such that a mold cavity (52) in the shape of a component is defined between the shell (50) and the core (48).

9. The method of claim 8 further comprising:
introducing molten metal alloy into the mold cavity (52);
allowing the metal alloy to cool and solidify; and
removing the core (48) by introducing caustic material into the voids (62) of the core (48).

10. The method of claim 9 wherein the caustic material includes at least one of sodium hydroxide and potassium hydroxide.
